# EUROPÄISCHE PATENTSCHRIFT

(11) **EP 0 450 006 B1**
(45) Veröffentlichungstag und Bekanntmachung des Hinweises auf die Patenterteilung: **28.07.1993**
(21) Anmeldenummer: 90914120.2
(22) Anmeldetag: 27.09.1990
(51) Int. Cl.: B60G 17/015

(54) **VERFAHREN UND VORRICHTUNG ZUR FAHRWERKREGELUNG**
PROCESS AND DEVICE FOR CHASSIS CONTROL
PROCEDE ET DISPOSITIF POUR LA REGULATION DU CHASSIS

(30) Priorität: 24.10.1989 DE 3935376
(43) Veröffentlichungstag der Anmeldung: 09.10.1991
(73) Patentinhaber: ROBERT BOSCH GMBH, 70442 Stuttgart (DE)
(72) Erfinder: SCHRAMM, Wolfgang, D-7250 Leonberg 7 (DE); SCHENK, René, D-7000 Stuttgart 40 (DE)
(86) Internationale Anmeldenummer: DE9000732
(87) Internationale Veröffentlichungsnummer: WO9106439

(56) Entgegenhaltungen:
- EP-A- 188 199
- EP-A- 197 316
- US-A- 4 468 050
- PATENT ABSTRACTS OF JAPAN, Band 8, Nr. 57 (M-283)(1494),15. März 1984

## Beschreibung

### Stand der Technik

Die Erfindung betrifft ein Verfahren zur Fahrwerkregelung an Fahrzeugen, bei dem aus mindestens einer Zustandsgröße die Soll-Dämpferkraft (Sollwert) für mindestens einen verstellbaren Dämpfer mit strömungswiderstandsgedämpften Kolben ermittelt und zur Ansteuerung des Dämpfers verwendet wird.

Herkömmliche Fahrwerke weisen ein sogenanntes passives Dämpfungssystem auf, das heißt, parallel zur jeweils vorhandenen Federanordnung eines Rades ist ein Dämpfer geschaltet, der zum Beispiel einen flüssigkeitsgedämpften Kolben aufweist. Durch Zug-bzw . Druckkräfte erfolgt eine Flüssigkeitsverdrängung. Die Flüssigkeit passiert dabei einen Durchströmquerschnitt.

Bei einer sogenannten semiaktiven Fahrwerkregelung sind Dämpfer eingesetzt, die einen von einem Kolben in zwei Arbeitsräume unterteilten Zylinder aufweisen. Es ist ein von außen steuerbarer Durchströmquerschnitt für das vom Kolben verdrängbare Druckmedium vorgesehen, so daß sich die Dämpfungseigenschaften (Dämpferhärten) verstellen lassen. Je nach Fahrzeugzustand wird mittels eines Regelsystems die Ist-Dämpferkraft den aktuellen Bedingungen durch schnelle Einstellung des Durchströmquerschnitts angepaßt. Hierdurch läßt sich eine Verbesserung des Komforts und der Fahrsicherheit eines Fahrzeugs erzielen.

Es ist bekannt, eine Fahrwerkregelung nach dem Karnopp-Regelkonzept auszubilden und mit einem semiaktiven Spezialdämpfer zu betreiben. Bei dem Karnopp-Regelkonzept wird die Dämpferkraft proportional zu einer absoluten Aufbaugeschwindigkeit eingestellt. Diese sogenannte absolute Aufbaugeschwindigkeit ist zwischen einem Inertialsystem (ortsfestes, unabhängiges System) und einem Aufbaupunkt des Fahrzeugs definiert. Der erwähnte Spezialdämpfer besitzt elektrisch verstellbare Druckregelventile, wodurch eine vom Regelkreis vorgegebene Soll-Dämpferkraft direkt dem Dämpfer zu dessen Verstellung zugeführt werden kann. Derartige Spezialdämpfer sind jedoch sehr aufwendig.

Die EP-A-0 235 999 zeigt ein System zur Fahrwerkregelung an Fahrzeugen, bei dem aus den sensierten Geschwindigkeiten des Fahrzeugaufbaus und der Räder eine Sollkraft für einen verstellbaren Dämpfer mit strömungswiderstandsgedämpften Kolben berechnet wird. zur Einstellung dieser Sollkraft wird die Kolbengeschwindigkeit des Dämpfers mit der ermittelten Sollkraft verknüpft, was beispielsweise über ein Kennfeld geschehen kann, und das Verknüpfungsergebnis zur Einstellung des verstellbaren Durchströmquerschnitts des Dämpfers zugeführt.

Aufgabe der vorliegenden Erfindung ist die Optimierung der Einstellung eines Durchströmquerschnitts eines Dämpfers mit strömungswiderstandsgedämpften Kolben zur Erlangung einer berechneten Soll-Dämpferkraft unter Berücksichtigung des anzusteuerenden Dämpfers.

### Vorteile der Erfindung

Zur Lösung dieser Aufgabe kommt erfindungsgemäß ein aus dem Stand des Technik bekanntet einfach aufgebauter, semiaktiver Dämpfer zum Einsatz, bei dem lediglich ein verstellbarer Durchströmquerschnitt für das vom Kolben verdrängbare Druckmedium ausgebildet ist. Weitherhin wird auch bei dieses Erfindung der Istwert der Kolbengeschwindigkeit des Dämpfers unter Berücksichtigung der durch den Regelkreis ermittelten/errechneten Soll-Dämpferkraft dem Dämpfer zur Einstellung seines verstellbaren Durchströmquerschnitts zugeführt.

Der Kern der Erfindung besteht darin, daß ein Kennfeld eine Simulation des Dämpfers vornimmt, wobei als Ausgangsgröße eine Ist-Dämpferkraft geliefert wird. Diese Ist-Dämpferkraft wird zur Bildung einer Regeldifferenz zusammen mit der ermittelten Soll-Dämpferkraft an einen Regler angeschlossen, dessen Ausgangswert einerseits dem Dämpfer als Maß für den einzustellenden Durchströmquerschnitt und andererseits dem Kennfeld als Eingangsgröße zugeführt wird. Mithin erhält das Kennfeld als Eingangsgrößen die Kolbengeschwindigkeit (Istwert) des Dämpfers und den rechnerisch ermittelten Durchströmquerschnitt bzw. eine diesem entsprechende Spannung. Aufgrund des erwähnten Reglers wird durch Soll-/Istwertvergleich der nach dem Karnopp-Regelkonzept ermittelten Dämpferkraft und der vom Kennfeld gelieferten Dämpferkraft der Durchströmquerschnitt des Dämpfers so lange verstellt, bis Soll- und Istwert der Dämpferkraft übereinstimmen.

Insbesondere ist vorgesehen, daß die ermittelte Soll-Dämpferkraft dem Kennfeld als Eingangsgröße zugeführt wird. Die Soll-Dämpferkraft wird vorzugsweise nach dem karnopp-Regelkonzept ermittelt.

Eine Weiterbildung der Erfindung schlägt vor, als Zustandsgröße die -wie vorstehend bereits erwähnt-zwischen dem Inertialsystem und dem Aufbau des Fahrzeugs auftretende, absolute Aufbaugeschwindigkeit zu ermitteln und aus dieser und der zwischen dem Aufbau und dem Fahrwerk wirkenden relativen Kolbengeschwindigkeit (Istwert) des Dämpfers die Soll-Dämpferkraft zu bestimmen.

Für die Ermittlung der Soll-Dämpferkraft kann entweder eine digitale oder aber eine analoge Rechenschaltung eingesetzt werden.

Vorzugsweise ist zwischen Kennfeld und Dämpfer ein Spannungs/Durchströmquerschnitt-Umsetzer geschaltet. Dieser Umsetzer stellt den Durchströmquerschnitt des Dämpfers entsprechend der zugehörigen Steuerspannung ein.

Vorzugsweise wird das Kennfeld elektronisch erzeugt. Dieses kann mittels Digital- oder Analogtechnik erfolgen.

Die Erfindung betrifft ferner eine Vorrichtung zur Fahrwerkregelung an Fahrzeugen, mit einer Rechenschaltung, die aus mindestens einer Zustandsgröße die Soll-Dämpferkraft (Sollwert) für mindestens einen verstellbaren Dämpfer mit strömungswiderstandsgedämpftem Kolben ermittelt und dem Dämpfer zur Ansteuerung zuführt, wobei der Istwert der Kolbengeschwindigkeit des Dämpfers unter Berücksichtigung der ermittelten SollDämpferkraft über ein Kennfeld dem Dämpfer zur Einstellung seines verstellbaren Durchströmquerschnitts zugeführt wird.

Insbesondere ist ein Sensor vorgesehen, der den Kolbenweg des Dämpfers erfaßt und über einen Differenzierer und einen Vollweg-Gleichrichter einem Quadrierer zuführt, dessen Ausgangswert zur Bildung der Ist-Dämpferkraft mit einer dem Durchströmquerschnitt entsprechenden Steuerspannung multipliziert wird. Ein derartiger Schaltungsaufbau läßt sich auf einfache Weise in Analogtechnik realisieren. Die Analogschaltung sieht ferner vor, daß die Aufbaugeschwindigkeit einem in Abhängigkeit von dem Vorzeichen der Kolbengeschwindigkeit umsteuernden Inverter zugeleitet wird, der über einen Einweggleichrichter an einen Summenpunkt angeschlossen ist, dem als weitere Eingangsgröße der Ausgangswert des Vollweg-Gleichrichters zugeleitet wird, wobei der Ausgangswert des Summenpunktes die Soll-Dämpferkraft bildet.

Besonders gute Ergebnisse sind bei einer Fahrwerkregelung erzielbar, bei dem jedem Rad des Fahrzeugs ein verstellbarer Dämpfer mit zugehörigem Fahrwerkregelkreis zugeordnet ist.

### Zeichnung

Die Erfindung wird im folgenden anhand der Figuren näher erläutert. Es zeigen:
- Figur 1: ein Blockschaltbild einer Vorrichtung zur Fahrwerkregelung, wobei es sich nicht um eine Ausführungsart der Erfindung sondern um ein Beispiel handelt, das das Verständnis der Erfindung erleichtert.
- Figur 2: ein Ausführungsbeispiel einer Fahrwerkregelung gemäß der Erfindung und
- Figur 3: ein detailiertes Blockschaltbild der Fahrwerkregelung gemäß Figur 2.

### Beschreibung von Ausführungsbeispielen

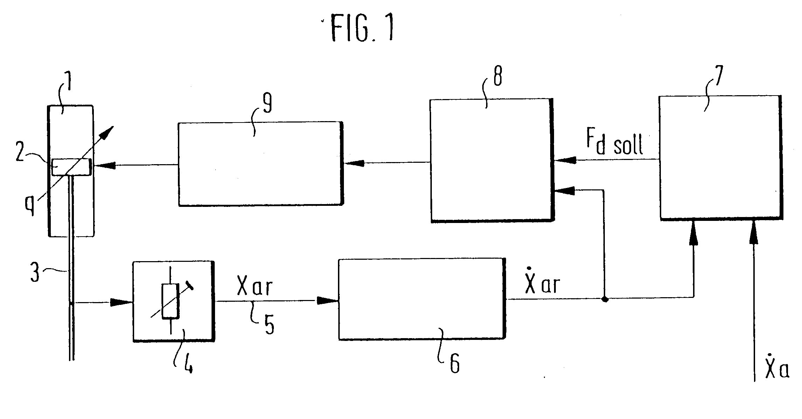

Die Figur 1 zeigt ein Blockschaltbild einer Fahrwerkregelung mit einem semiaktiven Dämpfer 1, der einen Kolben 2 und einen verstellbaren Durchströmquerschnitt q aufweist. Die Verstellbarkeit des Durchströmquerschnitts q ist durch den den Kolben 2 kreuzenden, schräg verlaufenden Pfeil angedeutet. Der Kolben 2 ist mit einer Kolbenstange 3 versehen, die mit einem Sensor 4 zusammenwirkt. Dieser kann beispielsweise als Potentiometer ausgebildet sein, so daß der jeweils eingestellte Widerstandswert des Potentiometers der Kolbenposition im Dämpfer entspricht. Am Ausgang 5 des Sensors 4 steht daher eine dem relativen Kolbenweg xₐᵣ entsprechende Spannung zur Verfügung. Unter dem relativen Kolbenweg ist der Einfederweg zwischen einem ein Rad des Fahrzeugs aufnehmenden Radtrageteil und dem Aufbau des Fahrzeugs zu verstehen.

Der Sensor 4 ist an einen Differenzierer 6 angeschlossen, der aus dem relativen Kolbenweg xₐᵣ eine relative Kolbengeschwindigkeit ẋₐᵣ bildet. Die Kolbengeschwindigkeit ẋₐᵣ wird einer Karnopp-Schaltung 7 und einem Kennfeld 8 jeweils als Eingangsgrößen zugeleitet. Die Karnopp-Schaltung 7 erhält als weitere Eingangsgröße eine absolute Aufbaugeschwindigkeit ẋₐ. Unter dieser absoluten Aufbaugeschwindigkeit ist die zwischen einem Inertialsystem und dem Aufbau des Fahrzeugs auftretende Geschwindigkeit zu verstehen. Das Inertialsystem kennzeichnet ein unabhängiges, ortsfestes Koordinatensystem.

Aus den Eingangsgrößen Kolbengeschwindigkeit ẋₐᵣ und Aufbaugeschwindigkeit ẋₐ ermittelt die Karnopp-Schaltung 7 nach dem bekannten Karnopp-Regelkonzept ("Skyhook") eine Soll-Dämpferkraft F_{d} ₛₒₗₗ. Hierunter ist eine rechnerisch ermittelte Kraft zu verstehen, der unter Zugrundelegung des genannten Karnopp-Regelkonzeptes am semiaktiven Dämpfer 1 vorliegen müßte.

Die Soll-Dämpferkraft F_{d} ₛₒₗₗ wird neben der bereits erwähnten weiteren Eingangsgröße der Kolbengeschwindigkeit ẋₐᵣ dem Kennfeld 8 zugeführt, das aus diesen Werten den bei den vorliegenden Fahrwerkzuständen einzustellenden Durchströmquerschnitt q als Steuerspannung ermittelt. Diese Steuerspannung wird einem Spannungs/Durchtrömquerschnitt-Umsetzer 9 zugeleitet, der den Durchströmquerschnitt q entsprechend der Größe der Steuerspannung einstellt.

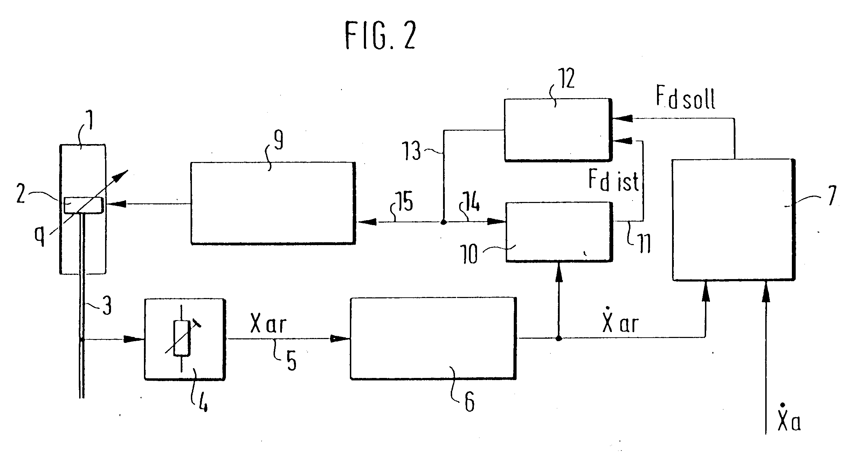

Im Ausführungsbeispiel der Figur 2 sind gleiche Teile mit gleichen Bezugsziffern versehen. In Abweichung zum Ausführungsbeispiel der Figur 1 wird die Kolbengeschwindigkeit ẋₐᵣ jedoch einem Kennfeld 10 zugeführt, daß eine Simulation des semiaktiven Dämpfers 1 vornimmt. Ein Ausgang 11 des Kennfelds 10 führt eine aufgrund der Simulation ermittelte Ist-Dämpferkraft F_{d} ᵢₛₜ einem Regler 12 zu, der zur Bildung einer Regeldifferenz von der Karnopp-Schaltung 7 als weitere Eingangsgröße die Soll-Dämpferkraft F_{d} ₛₒₗₗ erhält. Am Ausgang 13 des Reglers 12 steht eine dem Durchströmquerschnitt q des Dämpfers 1 entsprechende Steuerspannung zur Verfügung, die einerseits als Eingangsgröße 14 im Kennfeld 10 und andererseits als Eingangsgröße 15 dem Spannungs/Durchströmquerschnitt-Umsetzer 9 zugeführt wird, der die Einstellung des Durchströmquerschnitts q des Dämpfers 1 vornimmt.

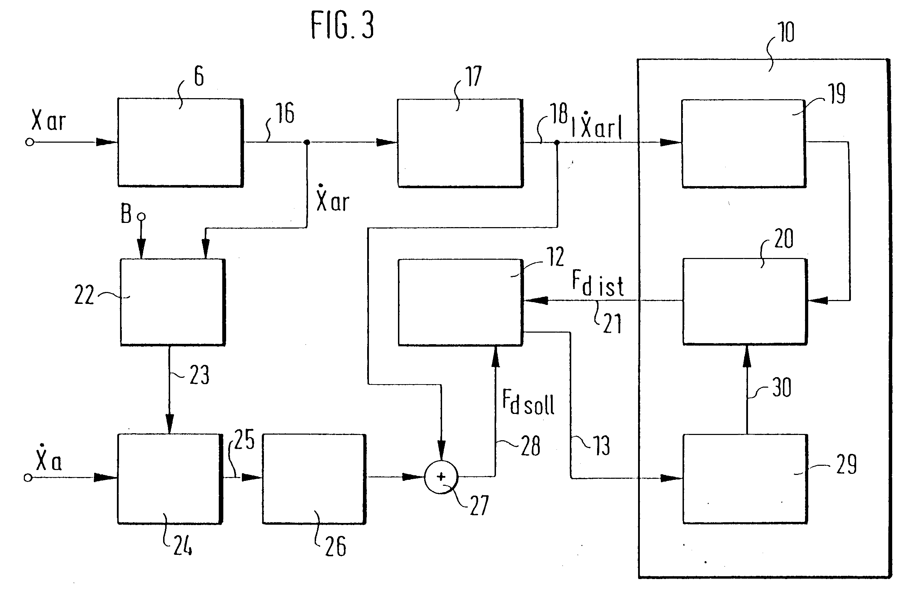

Die Figur 3 zeigt ein detailiertes Blockschaltbild einer Analogschaltung nach dem Konzept des Ausführungsbeispiels der Figur 2. Der Kolbenweg xₐᵣ wird dem bereits genannten Differenzierer 6 zugeführt, der gleichzeitig noch einen Tiefpaß enthalten kann. Die am Ausgang 16 des Differenzierers 6 zur Verfügung stehende Kolbengeschwindigkeit ẋₐᵣ wird einem Vollweg-Gleichrichter 17 zugeleitet, an dessen Ausgang 18 der Betrag der Kolbengeschwindigkeit ẋₐᵣ zur Verfügung steht. Dieser Betrag wird dem Kennfeld 10, und zwar dem Quadrierer 19, zugeleitet. Der Ausgangswert des Quadrierers 19 ist an einen Multiplizierer 20 des Kennfelds 10 angeschlossen, dessen Ausgang 21 die Ist-Dämpferkraft F_{d} ᵢₛₜ dem Regler 12 zuführt.

Die Kolbengeschwindigkeit ẋₐᵣ wird ferner einem Vorzeichen-Komparator 22 zugeleitet, der als weitere Eingangsgröße ein Bezugspotential B erhält. Der Komparator 22 prüft, ob die Kolbengeschwindigkeit ẋₐᵣ gegenüber dem Bezugspotential B positiv oder negativ ist. Der Ausgang 23 des Vorzeichen-Komparators ist an einen steuerbaren Inverter 24 angeschlossen, dem als Eingangsgröße die Aufbaugeschwindigkeit ẋₐ zugeleitet wird. Wenn die Kolbengeschwindigkeit ẋₐᵣ gegenüber dem Bezugspotential B einen positiven Wert annimmt, steuert der Ausgangs 23 den Inverter 24 derart an, daß dieser an seinem Ausgang 25 die Aufbaugeschwindigkeit ẋₐ unverändert -also nicht invertiert- aufweist. Der Inverter 24 invertiert die Aufbaugeschwindigkeit ẋₐ, wenn die Kolbengeschwindigkeit ẋₐᵣ gegenüber dem Bezugspotential B einen negativen Wert annimmt.

Der Ausgang 25 des Inverters 24 ist an einen Ein-weg-Gleichrichter 26 angeschlossen, der die positiven Werte der Aufbaugeschwindigkeit ẋₐ durchläßt. Diese werden einem Summenpunkt 27 zugeleitet, der als weitere Eingangsgröße den Betrag der Kolbengeschwindigkeit ẋₐᵣ erhält. Der Ausgang 28, an dem die Soll-Dämpferkraft F_{d} ₛₒₗₗ zur Verfügung steht, ist an den Regler 12 angeschlossen. Am Ausgang 13 des Reglers steht die Steuerspannung für den Durchströmquerschnitt q des Dämpfers 1 zur Verfügung, die über eine Offset/Begrenzungsschaltung 29 dem Multiplizierer 20 als Eingangsgröße 30 zugeführt wird.

Da in den Ausführungsbeispielen der Figuren 2 und 3 der Dämpfer 1 vom Kennfeld 10 simuliert wird, findet eine Regelung nur innerhalb der Elektronik statt, so daß keine mechanischen Verzögerungen auftreten. Hierdurch kann die Ausregelung sehr schnell und ohne Probleme mit Regelschwingungen erfolgen.

Mit der relativ einfachen erfindungsgemäßen Ausbildung läßt sich bei einer Fahrwerkregelung das Karnopp -Regelkonzept verwirklichen: Dieses Regelkonzept läßt sich mit weiteren Regelungen (z.B. fahrbahnabhängige Umschaltung) auf einfache Weise verbinden.

Insbesondere kann die der erfindungsgemäßen Lösung zugrunde liegende Elektronik direkt "vor Ort", also am oder im Dämpfer 1, eingesetzt werden. Dieses gilt ebenfalls für die notwendige Sensorik. Insofern ist es möglich, ein einfaches (auch nachrüstbares) semiaktives Fahrwerkregelungskonzept zu realisieren, ohne das separate Sensoren oder Steuergeräte eingesetzt werden müssen. Vorzugsweise wird jedes Rad des Fahrzeugs individuell geregelt, wodurch eine deutliche Verbesserung von Komfort und Fahrsicherheit hergestellt werden kann.

## Patentansprüche

1. Verfahren zur Fahrwerkregelung bei Fahrzeugen, bei dem
- aus mindestens einer Zustandsgröße die Soll-Dämpferkraft für mindestens einen verstellbaren Dämpfer mit strömungswiderstandsgedämpftem Kolben ermittelt und zur Ansteuerung des Dämpfers verwendet wird, wobei
- der Istwert der Kolbengeschwindigkeit des Dämpfers unter Berücksichtigung der ermittelten Soll-Dämpferkraft zur Einstellung des verstellbaren Durchströmquerschnitts des Dämpfers verwendet wird,
dadurch gekennzeichnet, daß
- zur Einstellung des verstellbaren Durchströmquerschnitts (q) des Dämpfers (1) eine Regeldifferenz (Ausgang 13) zwischen einer Ist-Dämpferkraft (Fdᵢₛₜ) und der Soll-Dämpferkraft (Fdₛₒₗₗ) gebildet wird, wobei
- zur Bildung der Ist-Dämpferkraft (Fdᵢₛₜ) der Istwert der Kolbengeschwindigkeit (X'ₐᵣ) und die Regeldifferenz (Ausgang 13) einem Kennfeld (10) zugeführt werden.

2. Verfahren nach Anspruch 1, **dadurch gekennzeichnet**, daß als Zustandsgröße eine zwischen einem Inertialsystem und dem Aufbau des Fahrzeugs auftretende absolute Aufbaugeschwindigkeit (ẋₐ) ermittelt wird und daß aus der Aufbaugeschwindigkeit (ẋₐ) und der zwischen dem Aufbau und dem Fahrwerk wirkenden relativen Kolbengeschwindigkeit (ẋₐᵣ = Istwert) des Dämpfers (1) die Soll-Dämpferkraft (Fd ₛₒₗₗ) ermittelt wird.

3. Verfahren nach Anspruch 2, **dadurch gekennzeichnet**, daß die Soll-Dämpferkraft (F_{d soll}) nach dem Karnopp-Regelkonzept ermitelt wird.

4. Verfahren nach einem der vorhergehenden Ansprüche, **dadurch gekennzeichnet**, daß die Soll-Dämpferkraft (F_{d} ₛₒₗₗ) mittels digitaler oder analoger Rechenschaltung ermittelt wird.

5. Verfahren nach einem der vorhergehenden Ansprüche, **dadurch gekennzeichnet,** daß das Kennfeld (10) eine Simulation des Dämpfers (1) vornimmt und als Ausgangsgröße (Ausgang 11) eine Ist-Dämpferkraft (F_{d ist}) liefert, die zur Bildung einer Regeldifferenz zusammen mit der ermittelten Soll-Dämpferkraft (Fd ₛₒₗₗ) an einen Regler (12) angeschlossen ist, dessen Ausgangswert (Ausgang 13) einerseits dem Dämpfer (1) als Maß für den einzustellenden Durchströmquerschnitt (q) und andererseits dem Kennfeld (10) als Eingangsgröße (14) zugeführt wird.

6. Verfahren nach einem der vorhergehenden Ansprüche, **dadurch gekennzeicnnet**, daß zwischen Kennfeld (10) und Dämpfer (1) ein Spannungs/Durchströmquerschnitt-Umsetzer (9) geschaltet wird.

7. Verfahren nach einem der vorhergehenden Ansprüche, **gekennzeichnet durch** ein digital oder analog erzeugtes elektronisches Kennfeld (10).

8. Vorrichtung zur Fahrwerkregelung bei Fahrzeugen mit einer Rechnerschaltung,
- die aus mindestens einer Zustandsgröße die Soll-Dämpferkraft für mindestens einen verstellbaren Dämpfer mit strömungswiderstandsgedämpftem Kolben ermittelt und zur Ansteuerung des Dämpfers verwendet, wobei
- der erfaßte Istwert der Kolbengeschwindigkeit des Dämpfers unter Berücksichtigung der ermittelten Soll-Dämpferkraft zur Einstellung des verstellbaren Durchströmquerschnitts des Dämpfers verwendet wird,
dadurch gekennzeichnet, daß
- Mittel (10, 12) vorgesehen sind, mittels der zur Einstellung des verstellbaren Durchströmquerschnitts (q) des Dämpfers (1) eine Regeldifferenz (Ausgang 13) zwischen einer Ist-Dämpferkraft (Fdᵢₛₜ) und der Soll-Dämpferkraft (Fdₛₒₗₗ) gebildet wird, wobei
- zur Bildung der Ist-Dämpferkraft (Fdᵢₛₜ) der Istwert der Kolbengeschwindigkeit (X'ₐᵣ) und die Regeldifferenz (Ausgang 13) einem Kennfeld (10) zugeführt werden.

9. Vorrichtung nach Anspruch 8, **dadurch gekennzeichnet**, daß ein Sensor (4) den Kolbenweg (xₐᵣ) des Dämpfers (1) erfaßt und über einen Differenzierer (6) und einen Vollweg-Gleichrichter (17) einem Quadrierer (19) zuführt, dessen Ausgangswert zur Bildung der Ist-Dämpferkraft (F_{d} ᵢₛₜ) mit einer dem Durchströmquerschnitt (q) entsprechenden Steuerspannung multipliziert wird.

10. Vorrichtung nach Anspruch 8 oder 9, **dadurch gekennzeichnet**, daß die Aufbaugeschwindigkeit (ẋₐ) einem in Abhängigkeit von dem Vorzeichen der Kolbengeschwindigkeit (ẋₐᵣ) umsteuernden Inverter (24) zugeleitet wird, der über einen Einweg-Gleichrichter (26) an einen Summenpunkt (27) angeschlossen ist, dem als weitere Eingangsgröße der Ausgangswert (18) des Vollweg-Gleichrichters (17) zugeführt wird, wobei der Ausgangswert (Ausgang 18) des Summenpunkts (27) die Soll-Dämpferkraft (F_{d} ₛₒₗₗ) bildet.

11. Vorrichtung nach einem der Ansprüche 8 bis 10, **dadurch gekennzeichnet**, daß jedem Rad des Fahrzeugs ein verstellbarer Dämpfer mit zugehörigem Fahrwerkregelkreis zugeordnet ist.

## Claims

1. Process for suspension control in vehicles, in which
- the reference damping force for at least one adjustable damper with flow-resistance-damped piston is calculated from at least one status variable and is used for actuating the damper, in which case
- the actual value of the piston speed of the damper is used, taking into account the calculated reference damping force, for the purpose of setting the adjustable through-flow cross-section of the damper,
characterised in that
- a control differential (output 13) between an actual damping force (Fd_{act}) and the reference damping force (Fd_{ref}) is formed for the purpose of setting the adjustable through-flow cross-section (q) of the damper (1), in which case
- for the purpose of forming the actual damping force (Fd_{act}), the actual value of the piston speed (Q'ₐᵣ) and the control differential (output 13) are fed to a family of characteristic curves (10).

2. Process according to Claim 1, characterised in that an absolute vehicle body speed (ẋₐ) which occurs between an inertial system and the body of the vehicle is calculated as status variable and in that the reference damping force (F_{d ref}) is calculated from the vehicle body speed (ẋₐ) and the relative piston speed (ẋₐᵣ = actual value) of the damper (1) acting between the vehicle body and the suspension.

3. Process according to Claim 2, characterised in that the reference damping force (F_{d} _{ref}) is calculated according to the Karnopp control concept.

4. Process according to one of the preceding claims, characterised in that the reference damping force (F_{d} _{ref}) is calculated by means of digital or analog computing circuitry.

5. Process according to one of the preceding claims, characterised in that the family of characteristic curves (10) carries out a simulation of the damper (1) and supplies as output variable (output 11) an actual damping force (F_{d} _{act}) which is connected, together with the calculated reference damping force (F_{d} _{ref}), to a controller (12) for the purpose of forming a control differential, the output value (output 13) of which controller is fed on the one hand to the damper (1) as a measure of the through-flow cross-section (q) to be set and on the other hand to the family of characteristic curves (10) as an input variable (14).

6. Process according to one of the preceding claims, characterised in that a voltage/through-flow cross-section converter (9) is connected between the family of characteristic curves (10) and the damper (1).

7. Process according to one of the preceding claims, characterised by an electronic family of characteristic curves (10) which is generated in a digital or analog manner.

8. Device for suspension control on vehicles having a computing circuit
- which calculates from at least one status variable the reference damping force for at least one adjustable damper with flow-resistance-damped piston and uses this to actuate the damper, in which case
- the detected actual value of the piston speed of the damper is used, taking into account the calculated reference damping force, for the purpose of setting the adjustable through-flow cross-section of the damper,
characterised in that
- means (10, 12) are provided, by means of which a control differential (output 13) between an actual damping force (Fd_{act}) and the reference damping force (Fd_{ref}) is formed for the purpose of setting the adjustable through-flow cross-section (q) of the damper (1), in which case
- for the purpose of forming the actual damping force (Fd_{act}), the actual value of the piston speed (Q'ₐᵣ) and the control differential (output 13) are fed to a family of characteristic curves (10).

9. Device according to Claim 8, characterised in that a sensor (4) detects the piston travel (xₐᵣ) of the damper (1) and feeds it via a differentiator (6) and a full-wave rectifier (17) to a squaring element (19), the output value of which is multiplied by a control voltage corresponding to the through-flow cross-section (q) for the purpose of forming the actual damping force (F_{d act}).

10. Device according to Claim 8 or 9, characterised in that the vehicle body speed (ẋₐ) is supplied to an inverter (24) which is changed over as a function of the sign of the piston speed (ẋₐᵣ) and is connected via a half-wave rectifier (26) to a summing point (26), to which the output value (18) of the full-wave rectifier (17) is fed as a further input variable, the output value (output 18) of the summing point (27) forming the reference damping force (F_{d ref}).

11. Device according to one of Claims 8 to 10, characterised in that each wheel of the vehicle is assigned an adjustable damper with associated suspension control circuit.

## Revendications

1. Procédé pour la régulation du châssis sur des véhicules, procédé dans lequel :
- à partir d'au moins une variable d'état, l'effort d'amortissement de consigne pour au moins un amortisseur réglable avec un piston amorti par la résistance d'écoulement, est déterminé et est utilisé pour la commande de l'amortisseur,
- la valeur réelle de la vitesse du piston de l'amortisseur, compte tenu de l'effort d'amortissement de consigne ainsi déterminé, est utilisée pour la mise au point de la section transversale d'écoulement réglable de l'amortisseur,
procédé caractérisé en ce que :
- pour la mise au point de la section transversale d'écoulement réglable (q) de l'amortisseur (1), une différence de réglage (sortie 13) est formée entre un effort d'amortissement réel (F_{d réel}) et l'effort d'amortissement de consigne (F_{d cons}),
- pour la formation de l'effort d'amortissement réel (F_{d réel}), la valeur réelle de la vitesse du piston (ẋₐᵣ) et la différence de réglage (sortie 13) sont appliquées à un champ caractéristique (10).

2. Procédé selon la revendication 12, caractérisé en ce que comme variable d'état, une vitesse absolue de la carrosserie (ẋₐ), intervenant entre un système inertiel et la carrosserie du véhicule, est déterminée et en ce que, à partir de cette vitesse absolue de la carrosserie (ẋₐ) et la vitesse relative du piston (ẋₐᵣ = valeur réelle) de l'amortisseur (1), intervenant entre la carrosserie et le châssis, l'effort d'amortissement de consigne (F_{d} _{cons}) est déterminé.

3. Procédé selon la revendication 2, caractérisé en ce que l'effort d'amortissement de consigne (F_{d cons}) est déterminé selon le concept de réglage Karnopp.

4. Procédé selon une des précédentes revendications, caractérisé en ce que l'effort d'amortissement de consigne (F_{d cons}) est déterminé au moyen d'un circuit de calcul numérique ou analogique.

5. Procédé selon une des précédentes revendications, caractérisé en ce que le champ caractéristique (10) donne une simulation de l'amortisseur (1) et délivre en tant que grandeur de sortie (sortie 11) un effort d'amortissement réel (F_{d réel}), qui pour la formation d'une différence de réglage est appliqué conjointement avec l'effort d'amortissement de consigne (F_{d cons}), qui a été déterminé, à un régulateur (12) dont la valeur de sortie (sortie 13) est appliquée, d'une part, à l'amortisseur (1) comme mesure pour la section transversale d'écoulement (q) à régler et, d'autre part, au champ caractéristique (10) en tant que grandeur d'entrée (14).

6. Procédé selon une des précédentes revendications, caractérisé en ce que, entre le champ caractéristique (10) et l'amortisseur (1) est branché un convertisseur tension/section transversale d'écoulement (9).

7. Procédé selon une des précédentes revendications, caractérisé par un champ caractéristique (10) électronique, obtenu sous forme numérique ou analogique.

8. Dispositif pour la régulation du châssis sur des véhicules avec un circuit de calcul,
- qui à partir d'une variable d'état détermine l'effort d'amortissement de consigne pour au moins un amortisseur réglable avec un piston amorti par la résistance à l'écoulement, et qui l'utilise pour commander l'amortisseur,
- la valeur réelle détectée de la vitesse du piston de l'amortisseur est utilisée, en tenant compte de l'effort d'amortissement de consigne qui a été déterminé, pour la mise au point de la section transversale d'écoulement réglable de l'amortisseur,
dispositif caractérisé en ce que :
- il est prévu des moyens (10, 12) grâce auxquels est formée, pour la mise au point de la section transversale d'écoulement réglable (q) de l'amortisseur (1) une différence de réglage (sortie 13) entre un effort d'amortissement réel (F_{d réel}) et l'effort d'amortissement de consigne (F_{d cons}),
- pour la formation de l'effort d'amortissement réel (F_{d réel}) la valeur réelle de la vitesse du piston (ẋₐᵣ) et la différence de réglage (sortie 13) sont appliquées à un champ caractéristique (10).

9. Dispositif selon la revendication 8, caractérisé en ce qu'un détecteur (4) détecte le trajet du piston (xₐᵣ) de l'amortisseur (1), et par l'intermédiaire d'un différenciateur (6) et d'un redresseur pleine onde (17) l'applique à un dispositif d'élévation au carré (19), dont la valeur de sortie est multipliée par une tension de commande correspondant à la section transversale d'écoulement (q) pour former l'effort d'amortissement réel (F_{d réel}).

10. Dispositif selon la revendication 8 ou la revendication 9, caractérisé en ce que la vitesse de la carrosserie (ẋₐ) est appliquée à un inverseur (24) inversant en fonction du signe de la vitesse du piston (ẋₐᵣ), et qui, par l'intermédiaire d'un redresseur demi onde (26) est raccordé à un point de totalisation (27), auquel est appliqué, en tant qu'autre grandeur d'entrée, la valeur de sortie (18) du redresseur pleine onde (17), et la valeur de sortie (sortie 18) du point de totalisation (27) représente l'effort d'amortissement de consigne (F_{d cons}).

11. Dispositif selon une des revendications 8 à 10, caractérisé en ce qu'à chaque roue du véhicule est associé un amortisseur réglable avec le circuit de réglage du châssis qui lui correspond.
